# EUROPEAN PATENT SPECIFICATION

(11) **EP 2 668 019 B1**
(45) Date of publication and mention of the grant of the patent: **23.11.2016**
(21) Application number: 12700613.8
(22) Date of filing: 18.01.2012
(51) Int. Cl.: B29C 61/02, B29C 63/42, F17C 1/06, F17C 1/16

(54) **METHOD TO IMPROVE THE BARRIER PROPERTIES OF COMPOSITE GAS CYLINDERS**
VERFAHREN ZUR VERBESSERUNG DER GASBARRIEREEIGENSCHAFTEN VON VERBUNDZYLINDERN
PROCÉDÉ D'AMÉLIORATION DES PROPRIÉTÉS DE BARRIÈRE AUX GAZ DE BOUTEILLES COMPOSITES

(30) Priority: 26.01.2011 EP 11000593; 15.06.2011 US 201161497414 P
(43) Date of publication of application: 04.12.2013
(73) Proprietor: Basell Polyolefine GmbH, 50389 Wesseling (DE)
(72) Inventor: ANDERNACH, Roland, 40670 Meerbusch (DE); LINDNER, Thomas, 64846 Gross Zimmern (DE)
(74) Representative: Gaverini, Gaetano Luigi Attilio
(86) International application number: PCT/EP2012/000199
(87) International publication number: WO 2012/100922

(56) References cited:
- EP-A1- 0 810 081
- WO-A1-00/66939
- WO-A1-02/44067
- US-A1- 2004 149 759
- US-A1- 2009 095 796

## Description

The present invention relates to a method improving the barrier properties of a pressure container of composite material comprising an inner liner made of polymer material, such as polyolefin or a similar material, and a fibre-reinforced, pressure supporting layer arranged outside of the inner liner.

The invention also relates to a high pressure composite gas cylinder having enhanced barrier properties against the permeation of gaseous or liquid hydrocarbons or other inflammable gases, which is useful as gas container in hospitals, as a fuel tank for gas driven automotive vehicles equipped with a combustion engine and also as propane container for gas stoves in cottages, camping caravans and small crafts or boats for recreational purposes.

### Prior art

Pressure containers for fluids have several uses, such as gas containers in hospitals and fuel containers for motor vehicles, but also in a smaller scale such as propane containers for gas stoves in cottages, camping caravans and small crafts or boats for recreational use. As a rule, such containers have been manufactured from metal. The metal, however, has the considerable disadvantage of heavy weight and difficult handling. Moreover there is often a problem of knowing how much of the original content is still left in the bottle or container.

One solution to this problem can be the pressure container's manufacture using composite material, making the container of lighter weight and more easy to handle. Because of the risk of explosion and accidents, many and strict requirements are imposed with respect to such pressure containers. Thus, the safety aspect is very essential in this connection. In particular, it is important that the container is impact resistant, so that leakages and explosions with possible following injuries to persons are reliably avoided. In addition, the barrier properties of the pressure container against the permeation of the gas comprised inside must be sufficiently high.

A solution wherein the pressure container has been manufactured of composite materials is described in EP 0 810 081 A1, including a method for manufacturing pressure containers, wherein an inner, gas-impenetrable liner made of plastic first is blow moulded and thereafter an outer layer consisting of a fibre-reinforced plastic which has been soaked in a resin bath, is wound around the liner.

However, as the result of poor adhesion between the layers within these composite materials, collapse of the inner liner layer was observed due to service conditions, for example when evacuating the container, giving rise to under-pressure inside the container, or when cooling, so that the temperature of the fluid becomes too low. The industry considers the generally low wetting and adhesive properties of plastic material as a problem. Some of the reasons for this might be that several plastic materials have chemical inert and non-porous surfaces, having low surface tensions. The wetting and adhesive properties of plastic materials may be increased for example by flame treatment or by corona discharge treatment which are known in the art and are ready available to improve adhesion.

**In** US 2004/149759 a **gastight, pressure-resistant storage and/or transport container for low-molecular, reactive filling media, is disclosed. The possible use of a "piece of shrink film" is generically mentioned, without any description of its shape and of the way it is oriented.**

**In** WO 02/44067 **a method for reinforcement of thin wall hollow thermoplastic storage vessels with one or more wraps of continuous fibers is disclosed. The document talks in a very general way about a heat shrinkable tubing wrap for protection of the fiber reinforcement from environmental or mechanical damage and/or corrosion.**

High pressure composite gas cylinders used especially for gas driven automotive vehicles equipped with combustion engines are commonly made of blow moulded plastic vessels reinforced with glass fibres applied in a secondary winding process. Stored gases are e.g. LPG (Liquid Pressurized Gas) or CNG (Compressed Natural Gas). The plastic material typically used for the inner liner, i.e. high molecular mass HDPE, has excellent mechanical properties with high sustainability, but it has only limited barrier properties with respect to the gases comprised. As the result of such permeability, composite gas cylinders are losing their load over some time period.

### Object of the invention

Thus, it was the object of the present invention to provide a method to enhance the barrier properties of composite gas cylinders for the storage of gas, especially if they are used for gas driven automotive vehicles equipped with a combustion engine as a fuel tank.

The composite gas cylinder for the storage of gas having enhanced barrier properties against the permeation of gaseous or liquid hydrocarbons or other inflammable gases can be used as gas containers in hospitals, as a fuel tank in gas driven automotive vehicles equipped with a combustion engine and also as propane containers for gas stoves in cottages, camping caravans and small crafts or boats for recreational purposes.

### Subject of the invention

It was surprisingly found that this object is achieved according to the instant invention by sheathing a composite gas cylinder, comprising an inner liner made of polyolefin and a fibre reinforced, pressure supporting layer, with a tubular plastic film **biaxially oriented in longitudinal and transverse direction** comprising a barrier material followed by subsequent shrinking by heat treatment.

The tubular polymeric film comprising the barrier material acts reliably as a stable and continuous barrier against diffusion of gaseous or liquid hydrocarbons or other inflammable gases. Dense wrapping is achieved by using cling additives.

### Detailed Description

The inner liner of the composite gas cylinder is made of a thermoplastic polymer material, such as polyethylene or a copolymer of ethylene with other olefins having 3 to 10 carbon atoms or polypropylene or copolymers of propylene with ethylene or other 1-olefins having 4 to 10 carbon atoms and may be manufactured by a known process.

Examples for known processes for the manufacture of the inner liner are blow moulding, or extruding or a similar method like injection moulding.

As soon as the inner liner is ready prepared according to one of the afore-mentioned processes, then the preparation continues by either sheathing the in liner's outer surface with the tubular barrier film by drawing it lengthwise over the outer surface of the inner liner, or directly winding around the outer surface of the inner liner the fibre-reinforced, pressure supporting layer.

If the tubular plastic film **biaxially oriented in longitudinal and transverse direction** comprising the barrier material **against diffusion of gaseous or liquid hydrocarbons or other inflammable gases** is applied first, then it is in direct contact with the outer surface of the inner liner from inside and in direct contact to the fibre-reinforced pressure supporting layer from the outside. If the tubular plastic film **biaxially oriented in longitudinal and transverse direction** comprising the barrier material **against diffusion of gaseous or liquid hydrocarbons or other inflammable gases** is applied secondly, then it is only in direct contact with the fibre-reinforced, pressure supporting layer from the inside.

During the sheathing of the tubular plastic film comprising the barrier material in addition adhesives may be used to improve the strong connection which may be an epoxy-polymer or a similar means or a hot melt or another solvent free adhesive composition. If desired, the tubular barrier film may be applied in two or three or even more layers.

As barrier material polymers are preferably used having a very low permeability for gaseous or liquid hydrocarbons. Such polymers are polyamides like polyhexamethylene adipineamide or poly-epsilon-caprolactame or polyesters like polyethyleneterephthalete or polybutylene- terephthalate or halogen substituted polymers like polyvinylchloride (PVC) or polyvinylidenechloride (PVDC) or fluorine comprising polymers such as polytetrafluorineethylene (PTFE) or ethylene vinylalcohol copolymer (EVOH). In addition, metallization of the surface of a plastic film, e.g. by vapour deposition, is also a suitable method to improve the film's barrier properties.

The barrier properties of the plastic film might be achieved by mono-layer film extrusion of plastic material with very low permeability, suitable for polyamides or polyesters or halogenic polymers, or by multi-layer co-extrusion of semi-permeable plastic materials with tie layers and barrier layers in-between used for PTFE or EVOH or by mono-layer film blowing of semi-permeable polymers and additional coating with barrier layers, such as metallization.

The tubular film may be produced by a casting process or by film extrusion through a slit die on a cooling drum and subsequent connection of the outer edges to form a tube or preferably by bubble blowing film extrusion through an annular die. The tubular film must be oriented biaxially in two perpendicular directions, such as longitudinal and transverse, to cause shrinkage during its heat treatment. The biaxial orientation may be effected either by stretching a flat film in two perpendicular directions or by drawing and blowing during the bubble blowing process using an annular die. The connection of the outer edges of a flat film to produce a tube may be effected by heat sealing or by welding or by the application of a suitable adhesive.

To cause the shrinkage and to improve the adhesion of the tubular barrier film at the outer surface of the inner liner or the composite gas cylinder, a final heat treatment is applied. Such heat treatment is performed in a furnance or by blowing hot air at a temperature of from 60 to 200 °C, preferably from 70 to 150 °C, more preferred from 80 to 130 °C, depending from the chemical composition of the barrier material and the plastic film. The treatment is maintained over a time period depending from the temperature applied of about 5 seconds to 5 minutes, preferably from 10 seconds to 3 minutes.

As soon as the outer surface of the inner liner is ready coated and heat treated according to the afore-mentioned processes, then the preparation continues by winding around some fibre-reinforced elements, for example glass fibre bands or treads to support the pressure resistance. These fibre-reinforced bands or treads are preferably applied according to the filament winding process which is well known in the art.

Suitable adhesion between the plastic film comprising the barrier material and the fibre-reinforced, pressure supporting layer is typically obtained by the application of surface corona treatment in combination with adhesives. An epoxy-polymer or a similar means may be used as adhesive. The adhesive may be applied onto the plastic film comprising the barrier material covering the inner liner before winding of the fibre-reinforced, pressure supporting layer onto the plastic film. Alternatively, the adhesive can at first be applied onto the inner side of the fibre-reinforced layer before adhesion on the plastic film comprising the barrier material coating the outer side of the inner liner. The adhesive may also be employed at the same time as the fibre-reinforced, pressure supporting layer is wound onto the plastic film comprising the barrier material on the outer side of the inner liner. In addition, direct contact between the plastic film comprising the barrier material and the fibre reinforced, pressure supporting layer is possible, as well.

### Figures of Drawing

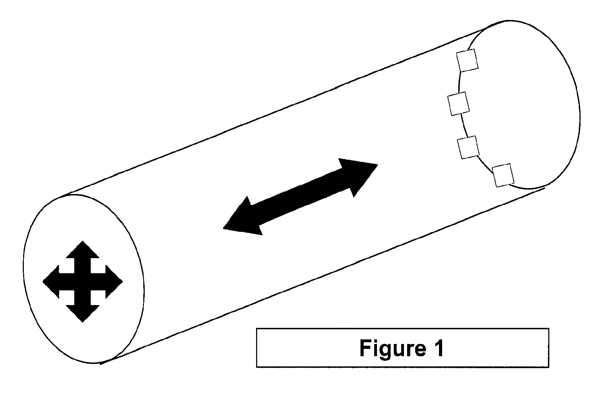

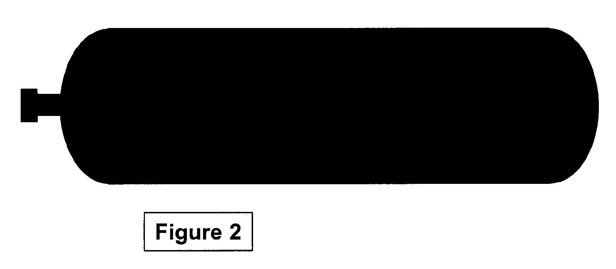

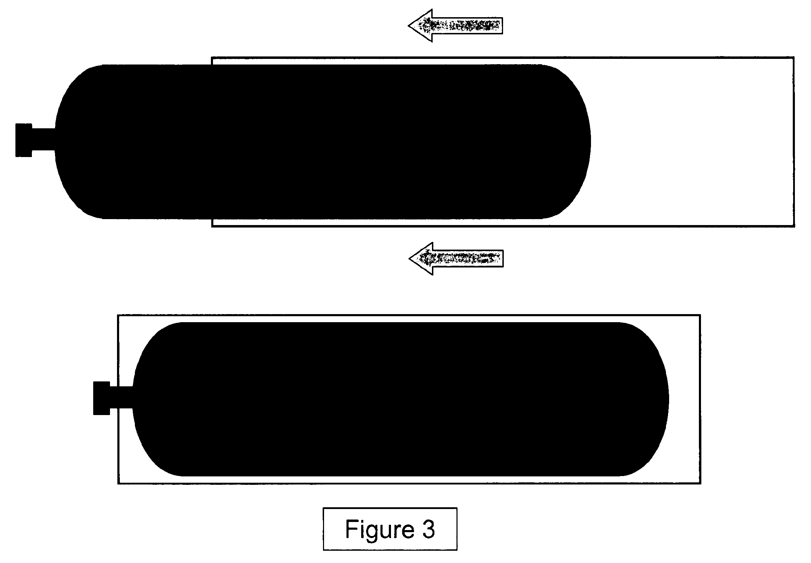

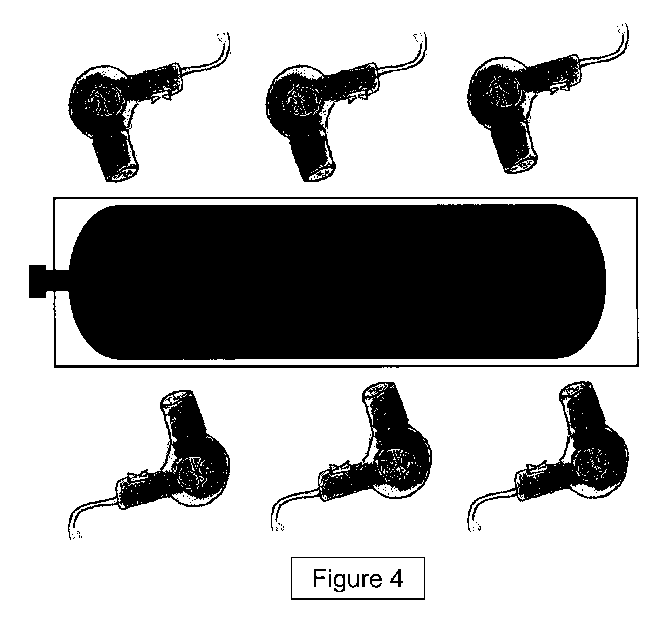

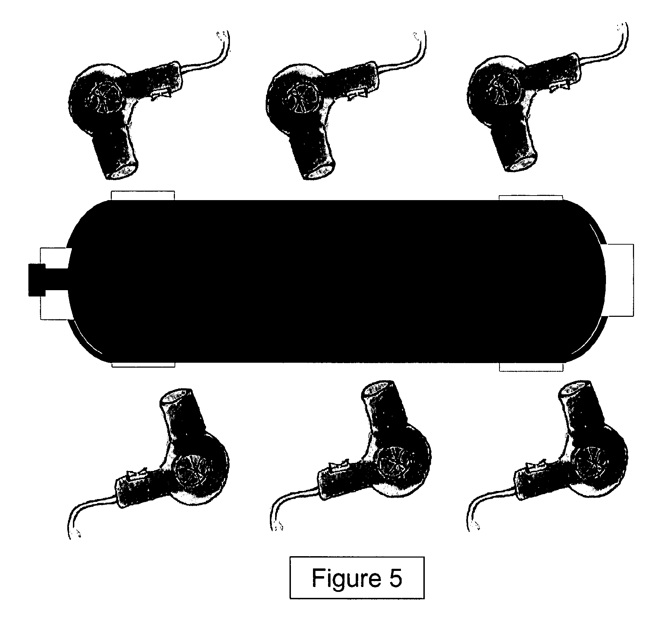

As a kind of working examples, the invention is more precisely illustrated by the following figures 1 to 5.
Figure 1 shows a segment of a tubular plastic film comprising the barrier material in a side view from top. The tubular plastic film shown is biaxially oriented in longitudinal and transverse direction, as symbolized by the arrows.
Figure 2 shows the ready prepared inner liner in a side view.
Figure 3 shows the sheathing of the tubular plastic film comprising the barrier material by drawing it lengthwise over the outer surface of the inner liner in side view. The application of adhesives which may be used to improve a strong connection is not shown in figure 3.
Figure 4 shows the heat treatment of the tubular plastic film comprising the barrier material now coating the inner liner in side view. The heat treatment is applied in this example by blowing hot air on the tubular plastic film comprising the barrier material.
Figure 5 shows the result of the heat treatment, whereby the tubular film covers the outer surface of the inner liner closely adhering very strong after the shrinkage caused by the heat treatment.

The pressure composite plastic gas cylinder prepared in accordance with the method of the instant invention has a very low permeability for gaseous or liquid hydrocarbons or other inflammable gases of less than 2·10⁻⁴ of the permeability of a pressure composite gas cylinder not comprising the barrier material, preferably of less than 1.5·10⁻⁴, more preferred of less than 1·10⁻⁴. The tubular plastic film **biaxially oriented in longitudinal and transverse direction** comprising the barrier material may be applied as a single layer or in two or three or even more layers.

## Claims

1. Method for improving the barrier properties of composite gas cylinders for the storage of gas, by sheathing a composite gas cylinder, comprising an inner liner made of polyolefin and an outer fibre-reinforced, pressure supporting layer, with a tubular plastic film comprising a barrier material against diffusion of gaseous or liquid hydrocarbons or other inflammable gases followed by subsequent shrinking by heat treatment, said tubular plastic film being biaxially oriented in longitudinal and transverse direction.

2. Method according to claim 1, whereby polymers are used as barrier material having a very low permeability for hydrocarbons comprising polyamides like polyhexamethylene adipineamide or poly-epsilon-caprolactame or polyesters like polyethyleneterephthalete or polybutyleneterephthalate or halogen substituted polymers like polyvinylchloride (PVC) or polyvinylidenechloride (PVDC) or fluorine comprising polymers such as poly-tetrafluorineethylene (PTFE) or polyvinylalcohol (PVA).

3. Method according to claim 1 or 2, whereby the inner liner is made of a polymer comprising polyethylene or a copolymer of ethylene with other olefins having 3 to 10 carbon atoms or polypropylene or a copolymer of propylene with ethylene or other 1 - olefins having 4 to 10 carbon atoms and is manufactured using such polymers by blow moulding, or extruding or by injection moulding.

4. Method according to any one of claims 1 to 3, whereby the fibre- reinforced, pressure supporting layer is applied by winding fibre-reinforced elements comprising glass fibre bands or treads around the outer surface of the inner liner according to the filament winding process.

5. Method according to any one of claims 1 to 3, whereby the fibre-reinforced, pressure supporting layer is applied by winding fibre-reinforced elements comprising glass fibre bands or treads around the outer surface of the tubular plastic film comprising the barrier material coated onto the outer surface of the inner liner according to the filament winding process.

6. Method according to any one of claims 1 to 5, whereby an epoxy-polymer or a similar adhesive or a hot melt adhesive is used to improve the adhesion between the inner liner and the fibre-reinforced, pressure supporting layer or between the inner liner and the tubular plastic film comprising the barrier material or between the tubular plastic film comprising the barrier material and the outer fibre-reinforced, pressure supporting layer.

7. Method according to any one of claims 1 to 6, whereby a section of the tubular plastic film comprising the barrier material is sheathed onto the outer surface of the inner liner by lengthwise drawing and whereby adhesives are used to improve the adhesion which comprise an epoxy-polymer or a similar means or which comprise a hot melt adhesive or another solvent free adhesive composition.

8. Method according to any one of claims 1 to 6, whereby a section of the tubular plastic film comprising the barrier material is sheathed onto the outer surface of the composite gas cylinder comprising the inner liner and an outer fibre-reinforced, pressure supporting layer by lengthwise drawing and whereby adhesives are used to improve its adhesion which comprise an epoxy-polymer or a similar means or which comprise a hot melt or another solvent free adhesive composition.

9. Method according to any one of claims 1 to 8, whereby a heat treatment is applied to the tubular plastic film comprising barrier material in a furnance or by blowing hot air at a temperature of from 60 to 200 °C, preferably from 70 to 150 °C, more preferred from 80 to 130 °C, over a time period depending from the temperature applied of about 5 seconds to 5 minutes, preferably from 10 seconds to 3 minutes.

## Patentansprüche

1. Verfahren zum Verbessern der Barriereeigenschaften von Verbundgaszylindern zur Lagerung von Gas durch Umhüllen eines Verbundgaszylinder, der eine Innenauskleidung aus Polyolefin und eine äußere faserverstärkte Druckhalteschicht umfasst, mit einer schlauchförmigen Kunststofffolie, die ein Barrierematerial gegen Diffusion von gasförmigen oder flüssigen Kohlenwasserstoffen oder anderen entzündbaren Gasen umfasst, gefolgt von anschließendem Schrumpfen durch Wärmebehandlung, wobei die schlauchförmige Kunststofffolie in Längs. und Querrichtung biaxial orientiert ist.

2. Verfahren nach Anspruch 1, wobei Polymere als Barrierematerial mit einer sehr niedrigen Permeabilität für Kohlenwasserstoffe verwendet werden, die Polyamide, wie Polyhexamethylenadipinamid oder Poly-epsilon-caprolactam, oder Polyester, wie Polyethylenterephthalat oder Polybutylenterephthalat, oder halogensubstituierte Polymere, wie Polyvinylchlorid (PVC) oder Polyvinylidenchlorid (PVDC), oder Fluor umfassende Polymere, wie Polytetrafluorethylen (PTFE), oder Polyvinylalkohol (PVA) umfassen.

3. Verfahren nach Anspruch 1 oder 2, wobei die Innenauskleidung aus einem Polymer hergestellt ist, das Polyethylen oder ein Copolymer von Ethylen mit anderen Olefinen mit 3 bis 10 Kohlenstoffatomen oder Polypropylen oder ein Copolymer von Propylen mit Ethylen oder anderen 1-Olefinen mit 4 bis 10 Kohlenstoffatomen umfasst und unter Verwendung solcher Polymere durch Blasformen oder Extrudieren oder durch Spritzgießen gefertigt wird.

4. Verfahren nach einem der Ansprüche 1 bis 3, wobei die faserverstärkte Druckhalteschicht durch Aufwickeln faserverstärkter Elemente, die Glasfaserbänder oder -profile umfassen, um die Außenseite der Innenauskleidung gemäß dem Filamentwickelverfahren aufgebracht wird.

5. Verfahren nach einem der Ansprüche 1 bis 3, wobei die faserverstärkte Druckhalteschicht durch Aufwickeln faserverstärkter Elemente, die Glasfaserbänder oder -profile umfassen, um die Außenseite der schlauchförmigen Kunststofffolie, die das Barrierematerial als Beschichtung auf der Außenseite der Innenauskleidung umfasst, gemäß dem Filamentwickelverfahren aufgebracht wird.

6. Verfahren nach einem der Ansprüche 1 bis 5, wobei ein Epoxypolymer oder ein ähnlicher Klebstoff oder Heißschmelzklebstoff zur Verbesserung der Adhäsion zwischen der Innenauskleidung und der faserverstärkten Druckhalteschicht oder zwischen der Innenauskleidung und der schlauchförmigen Kunststofffolie, die das Barrierematerial umfasst, oder zwischen der schlauchförmigen Folie, die das Barrierematerial umfasst, und der äußeren faserverstärkten Druckhalteschicht verwendet wird.

7. Verfahren nach einem der Ansprüche 1 bis 6, wobei ein Teil der schlauchförmigen Kunststofffolie, die das Barrierematerial umfasst, hüllenartig durch längsgerichtetes Ziehen auf die Außenseite der Innenauskleidung aufgebracht wird, und wobei Klebstoffe zur Verbesserung der Adhäsion verwendet werden, welche ein Epoxypolymer oder ähnliches Mittel umfassen, oder welche einen Heißschmelzklebstoff oder andere lösungsmittelfreie Klebstoffzusammensetzung umfassen.

8. Verfahren nach einem der Ansprüche 1 bis 6, wobei ein Teil der schlauchförmigen Kunststofffolie, die das Barrierematerial umfasst, hüllenartig durch längsgerichtetes Ziehen auf die Außenseite des Verbundgaszylinders, der die Innenauskleidung und eine äußere faserverstärkte Druckhalteschicht umfasst, aufgebracht wird, und wobei Klebstoffe zur Verbesserung von deren Adhäsion verwendet werden, welche ein Epoxypolymer oder ähnliches Mittel umfassen, oder welche eine Heißschmelz- oder andere lösungsmittelfreie Klebstoffzusammensetzung umfassen.

9. Verfahren nach einem der Ansprüche 1 bis 8, wobei in einem Ofen oder durch Blasen von Heißluft mit einer Temperatur von 60 bis 200 °C, vorzugsweise 70 bis 150 °C, bevorzugter 80 bis 130 °C, über einen Zeitraum von etwa 5 Sekunden bis 5 Minuten, vorzugsweise 10 Sekunden bis 3 Minuten, in Abhängigkeit von der angewendeten Temperatur eine Wärmebe-handlung auf die schlauchförmige Kunststofffolie, die Barrierematerial umfasst, angewendet wird.

## Revendications

1. Procédé d'amélioration les propriétés de barrière de bouteilles à gaz composites pour l'entreposage de gaz, par revêtement d'une bouteille à gaz composite, comprenant un revêtement interne constitué de polyoléfine et une couche externe supportant la pression, renforcée par des fibres, par un film plastique tubulaire comprenant un matériau barrière contre la diffusion d'hydrocarbures gazeux ou liquides ou d'autres gaz inflammables, suivi d'une rétraction consécutive par traitement thermique, ledit film plastique tubulaire étant orienté de manière biaxiale dans la direction longitudinale et transversale.

2. Procédé selon la revendication 1, des polymères étant utilisés comme matériau barrière, présentant une très faible perméabilité pour des hydrocarbures comprenant des polyamides tels que le poly(hexaméthylèneadipinamide) ou le poly-epsilon-caprolactame ou des polyesters tels que le poly(téréphtalate d'éthylène) ou le poly(téréphtalate de butylène) ou des polymères substitués par halogène, tels que le poly(chlorure de vinyle) (PVC) ou le poly(chlorure de vinylidène) (PVDC) ou des polymères comprenant du fluor tels que le polytétrafluoroéthylène (PTFE) ou le poly (alcool vinylique) (PVA).

3. Procédé selon la revendication 1 ou 2, le revêtement interne étant constitué d'un polymère, comprenant du polyéthylène ou un copolymère d'éthylène et d'autres oléfines comprenant 3 à 10 atomes de carbone ou du polypropylène ou un copolymère de propylène et d'éthylène ou d'autres 1-oléfines comprenant 4 à 10 atomes de carbone, et étant produit à l'aide de tels polymères par moulage par soufflage ou par extrusion ou par moulage par injection.

4. Procédé selon l'une quelconque des revendications 1 à 3, la couche supportant la pression, renforcée par des fibres, étant appliquée par enroulement d'éléments renforcés par des fibres comprenant des bandes ou des fils en fibre de verre autour de la surface externe du revêtement interne conformément au procédé d'enroulement de filaments.

5. Procédé selon l'une quelconque des revendications 1 à 3, la couche supportant la pression, renforcée par des fibres, étant appliquée par enroulement d'éléments renforcés par des fibres, comprenant des bandes ou des fils en fibre de verre, autour de la surface externe du film plastique tubulaire comprenant le matériau barrière revêtu sur la surface externe du revêtement interne conformément au procédé d'enroulement de filaments.

6. Procédé selon l'une quelconque des revendications 1 à 5, un polymère époxy ou un adhésif similaire ou un adhésif thermofusible étant utilisé pour améliorer l'adhérence entre le revêtement interne et la couche supportant la pression, renforcée par des fibres, ou entre le revêtement interne et le film plastique tubulaire comprenant le matériau barrière ou entre le film plastique tubulaire comprenant le matériau barrière et la couche externe, supportant la pression, renforcée par des fibres.

7. Procédé selon l'une quelconque des revendications 1 à 6, une section du film plastique tubulaire comprenant le matériau barrière étant revêtue sur la surface externe du revêtement interne par étirage longitudinal et des adhésifs, qui comprennent un polymère époxy ou un moyen similaire ou qui comprennent un adhésif thermofusible ou une autre composition adhésive exempte de solvant, étant utilisés pour améliorer l'adhérence.

8. Procédé selon l'une quelconque des revendications 1 à 6, une section du film plastique tubulaire comprenant le matériau barrière étant revêtue sur la surface externe de la bouteille à gaz composite comprenant le revêtement interne et une couche externe supportant la pression, renforcée par des fibres, par étirage longitudinal et des adhésifs, qui comprennent un polymère époxy ou un moyen similaire ou qui comprennent un adhésif thermofusible ou une autre composition adhésive exempte de solvant, étant utilisés pour améliorer son adhérence.

9. Procédé selon l'une quelconque des revendications 1 à 8, un traitement thermique étant appliqué sur le film plastique tubulaire comprenant le matériau barrière dans un four ou par soufflage d'air chaud à une température de 60 à 200°C, de préférence de 70 à 150°C, plus préférablement de 80 à 130°C, pendant une durée dépendant de la température appliquée d'environ 5 secondes à 5 minutes, de préférence de 10 secondes à 3 minutes.
